# EUROPÄISCHE PATENTANMELDUNG

(11) **EP 1 432 095 A2**
(43) Veröffentlichungstag der Anmeldung: **23.06.2004**
(21) Anmeldenummer: 03028865.8
(22) Anmeldetag: 16.12.2003
(51) Int. Cl.: H02G 15/04, H02G 3/06, H01R 13/658

(54) **Anschlussvorrichtung für Kabel bzw. Leitungen**

(30) Priorität: 17.12.2002 DE 20219618 U
(71) Anmelder: Knorr, Franz, 93176 Beratzhausen (DE)
(72) Erfinder: Knorr, Franz, 93176 Beratzhausen (DE)
(74) Vertreter: Wasmeier, Alfons, Dipl.-Ing.

(57) **Zusammenfassung**

Eine Anschlussvorrichtung zum Verbinden von mit einer Kabelverschraubung versehenen Kabeln oder Leitungen mit Industriegeräten ist in Form eines flachen Materialzuschnittes ausgebildet und weist ein ringförmiges Schirmelement auf, dessen einer Abschnitt einen Durchgang für einen Aderntyp des Kabels oder der Leitung und dessen anderer Abschnitt einen Durchgang für einen anderen Aderntyp des gleichen Kabels bzw. der gleichen Leitung aufnimmt. Das Schirmelement ist in Umfangsrichtung elastisch nachgiebig ausgebildet. Eine Metallverschraubung weist einen Ring auf, in den das Schirmelement so einsetzbar ist, dass die Außenfläche des Schirmelementes mit der Innenfläche des Ringes federnd in Eingriff steht.

## Beschreibung

Die Erfindung betrifft eine Anschlussvorrichtung nach dem Oberbegriff des Anspruches 1. Derartige Anschlussvorrichtungen sind für elektrische Industriegeräte bestimmt.

Bei Geräten dieser Art sind ein Teil der Kabeladern einzeln ummantelt, während ein anderer Teil der gegeneinander isolierten Adern in einer gemeinsamen Ummantelung zusammengefasst sind, und alle Adern eine gemeinsame äußere Bewehrung haben. Um die Einzeladern einerseits und die in einer Umhüllung zusammengefassten Adern andererseits einwandfrei voneinander trennen zu können und den Geräteanschluß zu vereinfachen bzw. Fehler beim Anschließen während der Montage zu vermeiden, soll mit der Erfindung eine Anschlussvorrichtung vorgeschlagen werden, die die beiden Aderntypen so führt, dass eine Verwechslung ausgeschlossen ist, und dass eine sichere Schirmauflage an der Kabelverschraubung erreicht wird.

Gemäß der Erfindung wird hierzu vorgeschlagen, dass ein Geräteanschlußelement in Form eines flachen Materialzuschnittes ein ringförmiges Schirmelement aufweist, dessen einer Abschnitt einen Durchgang für einen Aderntyp des Kabels oder der Leitung und dessen anderer Abschnitt einen Durchgang für einen anderen Aderntyp des gleichen Kabels aufnimmt, dass das Schirmelement in Umfangsrichtung elastisch nachgiebig ausgebildet ist, und dass eine Metallverschraubung einen Ring aufweist, in den das Schirmelement so einsetzbar ist, dass die Außenfläche des Schirmelementes mit der Innenfläche des Ringes federnd in Eingriff steht. Mit einem derartigen Schirmanschlußelement wird erreicht, dass die Kabeladern quasi in getrennten Durchgangskanälen voneinander getrennt werden, wobei der eine Aderntyp auf der Oberseite des ebenen Anschlußelementes und der andere Aderntyp auf dessen Unterseite angeordnet ist, und beide Aderntypen in den durch die Spiralenhälften gebildeten Hohlräumen einwandfrei untergebracht werden können. Des weiteren bilden das obere und das untere Schirmelement federnd nachgiebige Begrenzungen dieser beiden Durchgangskammern, die vom freien Ende der jeweiligen Hälften ausgehend gegen die Innenwandungen der aufnehmenden Metallhülse vorgespannt sind und damit einerseits das flache Anschlußelement an der Schirmanbindung durch Federdruck festlegen und andererseits die in den Durchgangskammern befindlichen Kabeladern positionieren.

Bei einer bevorzugten Ausführungsform der Erfindung besteht das Schirmelement aus zwei etwa halbkreisförmigen Ringabschnitten, deren jeweils eines Ende mit dem Anschlußelement fest verbunden ist und deren jeweils entgegengesetztes Ende unbefestigt bzw. frei federnd dem feststehenden Ende des jeweils anderen Elementes zugeordnet ist und sich an diesem bei starker Auslenkung abstützen kann. Somit besteht die gesamte Spirale aus zwei etwa gleichen Hälften, die mit dem inneren, der Kabelverschraubung zugewandten Ende des Anschlußelementes auf entgegengesetzten Seiten fest verbunden sind, so dass in Seitenansicht eine S-Form des Schirmelementes entsteht, während das jeweils freie Ende, d. h. die entgegengesetzten Enden der S-Form frei auslenkbar beweglich und in radialer Richtung nach außen vorgespannt sind, und sich an dem den Schirm aufnehmenden Ring der Metallhülse bzw. Kabelverschraubung abstützen.

Bei einer anderen Ausführungsform der Erfindung besteht das Schirmelement aus einem einseitig eingespannten Vollkreisschirm, dessen Anfang fest mit dem Anschlußelement verbunden ist, und dessen freies, elastisch nachgiebiges Ende kreisförmig um mehr als 360° um den Anfangsabschnitt geschlungen ist, wobei das Ende bei Beanspruchung der Spirale entlang des Umfangs des Schirmelementes frei beweglich geführt ist. Bei dieser Ausführungsform werden in gleicher Weise wie bei der vorbeschriebenen Ausführungsform zwei Durchgangskanäle geschaffen, die durch das ebene Anschlußelement voneinander getrennt sind. Die Spirale ist jedoch hierbei um mehr als 360° geführt, und lediglich an einer Stelle befestigt. Die Funktion einer derartigen Spirale entspricht der nach der erstgeschilderten Ausführungsform.

Eine Schelle, die mit dem Kopfteil des Anschlußelementes verbunden wird und die mit Bohrungen des Kopfteiles ausgerichtete Öffnungen aufweist, nimmt eine Gruppe von zwei unterschiedlichen Aderntypen auf, deren eine mehrere Adern in einer gemeinsamen Umhüllung umfaßt, während die andere Gruppe aus einzelnen Adern, die nicht gemeinsam umhüllt sind, besteht. Die alle Adern umschließende Kabelbewehrung ist am Ausgang des Schirmspiralen-Aufnahmeringes so ausgebildet, dass die Adern mit gemeinsamer Umhüllung und die einzelnen Adern der anderen Gruppe, die keine gemeinsame Umhüllung haben, aus dem Gesamtkabel vorstehen. Die Schirmspirale wird über die Aderngruppen soweit aufgeschoben, dass die Aderngruppen von der Spirale umschlossen werden und die frei liegenden Adernenden bis über das Kopfteil des Anschlußelementes hinaus vorstehen, so dass die Schelle die Aderngruppen mit Hilfe von Schraubverbindungen an dem Anschlußelement festlegt, wobei die Aderngruppe mit Umhüllung oder wahlweise die Aderngruppe ohne Umhüllung über die Schelle angebunden wird.

Eine besonders einfache Ausführungsform der Erfindung besteht aus einem Anschlußelement mit einem Kopfteil und einem langgestreckten Steg, der um einen Winkel von etwa 90° gegenüber dem unverändert gebliebenen Stegteil verdreht wird. Der verdrehte Abschnitt wird zusätzlich zu einer Teilkreisform bzw. Kreisform gebogen, so dass ein Durchgang für die Adern gebildet wird, der elastisch nachgiebig ist und der ringförmig sein kann, wobei das lose Stegende frei und radial nach außen elastisch nachgiebig bleibt und sich gegen die Innenwandung des Ringes abstützen kann.

Weitere Merkmale der Erfindung ergeben sich aus der nachstehenden Figurenbeschreibung und den Patentansprüchen.

Nachstehend wird die Erfindung in Verbindung mit der Zeichnung anhand von Ausführungsbeispielen erläutert. Es zeigt:
- Fig. 1: eine perspektivische Darstellung der erfindungsgemäßen Schirmanschluß-Anordnung für Kabel, auseinandergezogen gezeichnet,
- Fig. 2: in verkleinerter Darstellung und zusammengebaut die Anordnung nach Figur 1 in seitlicher Ansicht,
- Fig. 3: in verkleinerter Darstellung und zusammengebaut die Anordnung nach Figur 1 in Aufsicht,
- Fig. 4: eine Frontansicht der Darstellung nach Figur 2,
- Fig. 5: das Anschlußelement in perspektivischer Darstellung,
- Fig. 6: eine Seitenansicht des Anschlußelementes nach Figur 5,
- Fig. 7: eine Aufsicht auf das Anschlußelement nach Figur 5,
- Fig. 8: eine Frontansicht des Anschlußelementes nach Figur 5 von rechts,
- Fig. 9: eine andere Ausführungsform eines Anschlußelementes in perspektivischer Darstellung,
- Fig. 10: eine Seitenansicht des Anschlußelementes nach Figur 9,
- Fig. 11: eine Aufsicht auf das Anschlußelement nach Figur 5,
- Fig. 12: eine Stirnansicht des Anschlußelementes nach Figur 9 von rechts,
- Fig. 13: eine weitere Ausführungsform eines Anschlußelementes nach der Erfindung in der ursprünglichen gestreckten Form,
- Fig. 14: eine Darstellung entsprechend der nach Figur 13 mit verdrehtem Stegabschnitt,
- Fig. 15: eine Frontansicht der Darstellung nach Figur 14,
- Fig. 16a, b, c, d: eine Frontansicht, eine Seitenansicht, eine Aufsicht und eine perspektivische Ansicht einer weiteren Ausführungsform einer Schirmspirale mit Schnellklemmfeder nach der Erfindung,
- Fig. 17a, b, c, d: in Frontansicht, Seitenansicht, Aufsicht und perspektivischer Darstellung eine andere Ausführungsform einer Schirmspirale mit Schnellklemmfeder und Klemmschraube, und
- Fig. 18a, b, c, d: in Frontansicht, Seitenansicht, Aufsicht und perspektivischer Ansicht eine weitere Ausführungsform einer Schirmspirale nach der Erfindung.

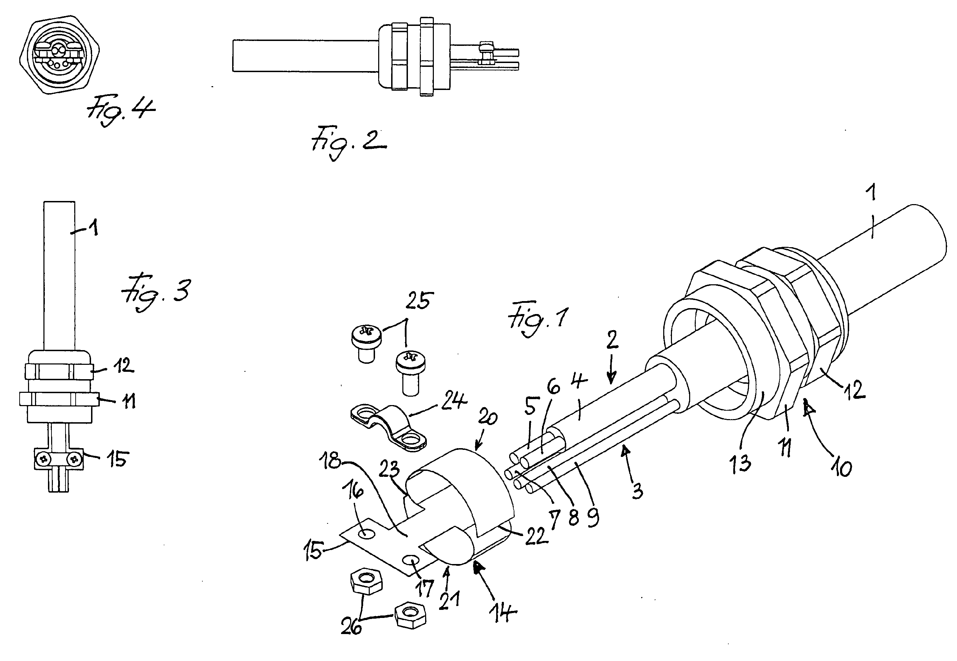

Ein mehradriges Kabel 1 mit Außenmantel weist einen oberen Abschnitt 2, bestehend aus zwei gemeinsam bei 4 ummantelten Adern 5, 6 und einen unteren, nicht gemeinsam ummantelten, aus drei Adern 7, 8, 9 bestehenden Abschnitt 3 auf. Die Adern 7, 8, 9 sind, wie auch die Adern 5, 6 einzeln mit einer Isolierschicht umgeben, deren vorderes Ende zum Anschließen von der Isolierung befreit sind, so dass sie an den Anschlußenden blank sind. Eine rohrförmige Metallhülle 10 in Form einer Kabelverschraubung umschließt das Kabel 1 und besteht aus einer Verschraubung 11, 11', einem Zwischenring 12 und einer an das Schraubglied 11 anliegenden Metallhülse 13, deren Innenwand eine Schirmspirale bzw. Anschlussvorrichtung 14 aufnimmt, die ein flaches, ebenes, zum Teil T-förmiges Anschlußelement 15 mit zwei Öffnungen 16, 17, einem Steg 18 und einer flachen Verbreiterung 19 sowie Ringhälften 20 und 21 besteht, die sich zu einem Kreis ergänzen und bei 22, 23 in Umfangsrichtung geöffnet sind, wobei beide Hälften miteinander eine S-Form darstellen, deren oberer und unterer Abschnitt durch die flache Verbreiterung 19 miteinander verbunden sind. Die Abschnitte 22, 23 sind an ihren Anschlußstellen über den ebenen Abschnitt 19 eingespannt und an den freien Enden bei 22, 23 federnd ausgebildet.

Der obere Abschnitt 20 der Schirmspirale 14 ist zur Aufnahme der Adern 5, 6, der untere Abschnitt 21 der Schirmspirale 14 zur Aufnahme der Adern 7, 8, 9 vorgesehen, so dass eine Trennung der Aderngruppen 5, 6 einerseits und 7, 8, 9 andererseits in einen oberen und unteren Teil der Schirmspirale 14 gewährleistet ist.

Den Öffnungen 16, 17 des flachen Anschlußelementes 15 ist zum Anschließen des Kabels an das jeweilige (nicht dargestellte) Gerät eine Schelle 24 zugeordnet, die mit Schrauben 25 und Schraubmuttern 26 befestigt wird und wahlweise die Aderngruppen 5, 6 oder 7, 8, 9 zum Verbinden festlegt.

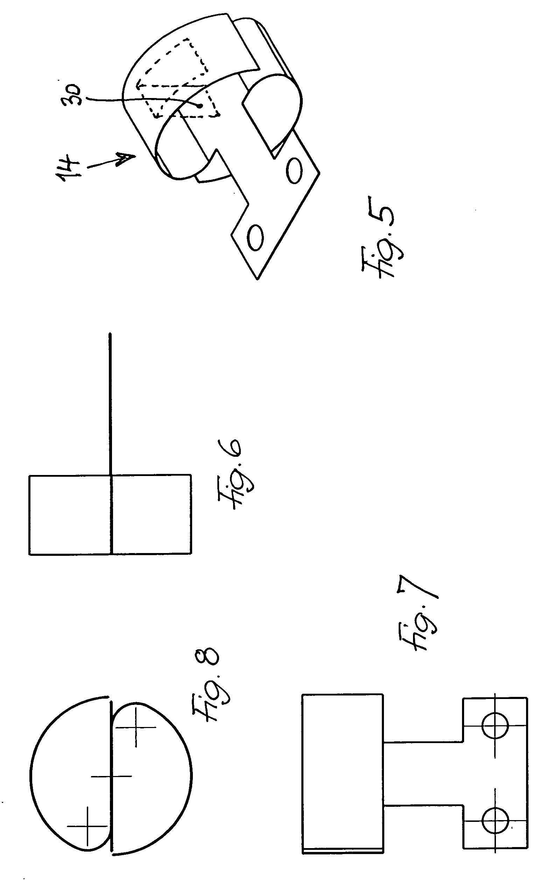

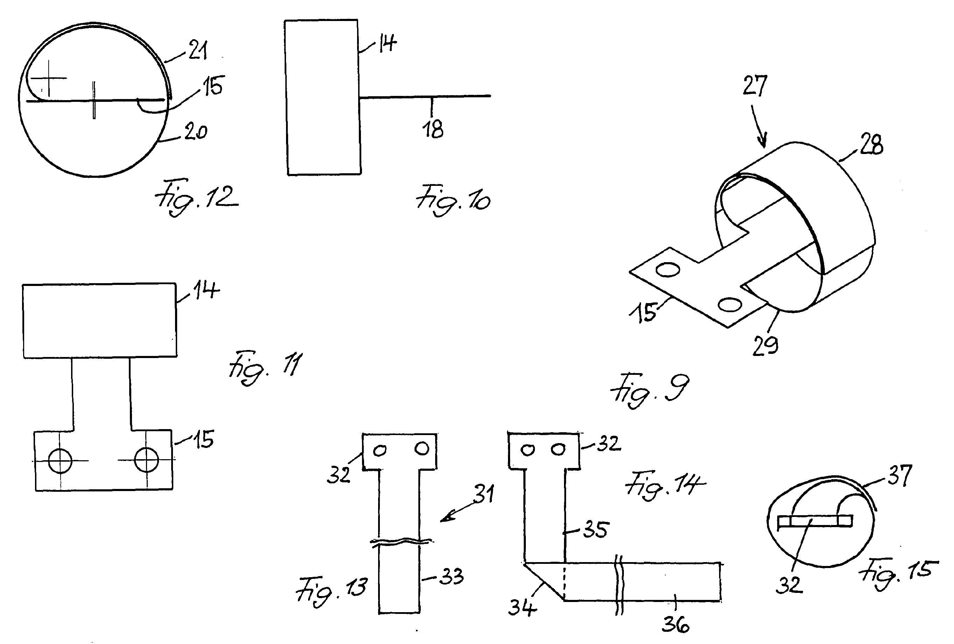

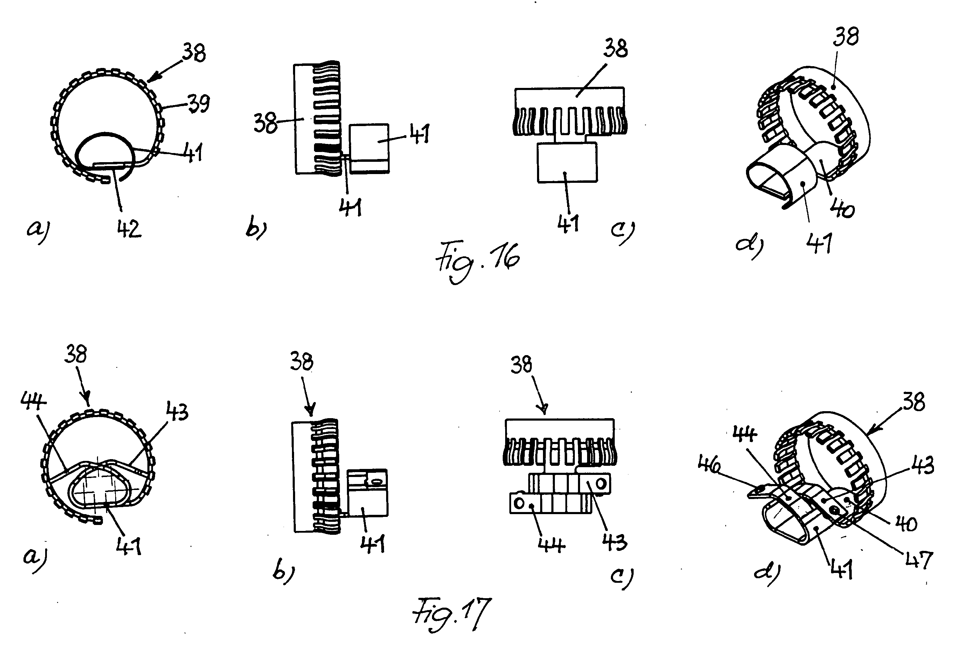

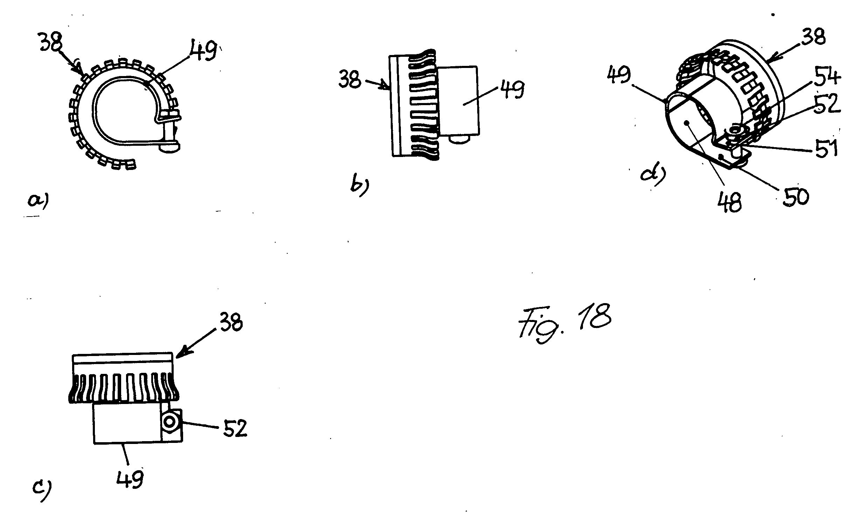

Bei der Ausführungsform nach den Figuren 8 - 12 ist die Schirmspirale 27, die der aus zwei im wesentlichen symmetrisch ausgebildeten Hälften bestehenden Schirmspirale 14 nach den Figuren 4 - 7 entspricht, in ihrer Umfangsfläche einteilig ausgebildet, wobei der obere Abschnitt 28 in Höhe des Anschlußelementes nicht unterbrochen, sondern in geschlossener Kreisform 29 fortgesetzt wird, die den oberen Abschnitt zumindest teilweise überlappt (bei 28), so dass die Umfangsfläche der Spirale sich über einen Winkel von mehr als 360° erstrecken kann. Die Funktionsweise der Schirmspiralen nach den Figuren 8 - 11 entspricht dabei der nach den Figuren 4 - 7 in analoger Weise.

Wahlweise kann bei der Ausführung nach Figur 5 oder Figur 9 jede Hälfte der S-förmigen Spirale zusätzlich durch einen Steg 30 (gestrichelt angedeutet in Figur 5), der am Schirm radial nach innen gegen das Anschlußelement 15 verlaufend, oder aber vom Anschlußelement 15 radial nach außen verlaufend ausgebildet ist, unterteilt werden, so dass der obere und der untere Schirmabschnitt jeweils in zwei Durchgangskanäle unterteilt sind. Der Steg 30 kann beispielsweise aus der Umfangsfläche ausgespart und entsprechend auf das Anschlußelement 15 zu gebogen werden.

Bei der vereinfachten Ausführungsform nach den Figuren 13 - 15 ist das Anschlußelement 31 aus dem Kopfteil 32 und dem Schaftteil 33 bestehend dargestellt. Das Schaftteil 33 ist dabei als Längsstreifen ausgeführt und, wie in Figur 14 gezeigt, an einer Stelle 34 im Winkel von 45° in die gemeinsame Ebene mit dem unveränderten Teil des Schaftes 33 gedreht, so dass der Schaft 31 nach wie vor in der gemeinsamen Ebene (Zeichenebene) zu liegen kommt. Der gegenüber dem unverändert belassenen Schaftteil 35 verdrehte Schaftteil 36 wird kreisringförmig gebogen, wie in Figur 15 schematisch angedeutet, und stellt dann die Schirmspirale 37 dar.

Fig. 16 zeigt in unterschiedlichen Ansichten eine Schirmspirale mit Schnellklemmfeder, bei der die Schirmspirale 38 mit mäanderförmiger Zackung 39 am einen Öffnungsende über einen Steg 40 eine Blattfeder 41 zum Klemmen des Leitungsschirms aufweist, die mit der Schirmspirale 38, z.B. durch Schweißen oder Nieten, fest verbunden ist (bei 42) oder aus einem einteiligen Zuschnitt gebogen ist.

Bei der Ausführungsform nach Fig. 17 weist die Schirmspirale 38 einen Steg 40 auf, mit dem die aus zwei Federschenkeln 43, 44 bestehende Blattfederanordnung bei 42 verbunden ist. Die beiden Federschenkel 43, 44 haben an ihren beiden freien Enden Kontakte 46, 47 und werden zum Kontaktieren der Leitungen mit Hilfe einer Flachzange entrastet. Die dauerhafte Kontaktieren wird durch die Federschenkel 43, 44 gewährleistet. Bei dieser Anschlussart ist von wesentlichem Vorteil, dass der Anpressdruck auch erhalten bleibt, wenn das Leitungsmaterial fließt.

Bei der Ausführungsform nach Fig. 18 ist wiederum die Schirmspirale 38 mit Hilfe eines Steges 48 mit der Blattfeder 49 fest verbunden, die durch eine Schellenanordnung 50, 51 geklemmt wird, wobei die Klemmung mit Hilfe einer Schraubanordnung 52 (Schraubbolzen 53 mit Schraubenmutter 54) geklemmt wird oder über Rastkonturen im Blechteil verriegelt wird (nicht dargestellt).

## Patentansprüche

1. Anschlussvorrichtung zum Verbinden von mit einer Kabelverschraubung versehenen Kabeln oder Leitungen mit Industriegeräten, **dadurch gekennzeichnet, dass** die GeräteAnschlussvorrichtung (14) in Form eines flachen Materialzuschnittes ein ringförmiges Schirmelement (20, 21) aufweist, dessen einer Abschnitt (20) einen Durchgang für einen Aderntyp (5, 6) des Kabels oder der Leitung (1) und dessen anderer Abschnitt (21) einen Durchgang für einen anderen Aderntyp (7, 8, 9) des gleichen Kabels (1) aufnimmt, dass das Schirmelement (20, 21) in Umfangsrichtung elastisch nachgiebig ausgebildet ist, und dass eine Metallverschraubung (10) einen Ring (13) aufweist, in den das Schirmelement (20, 21) so einsetzbar ist, dass die Außenfläche des Schirmelementes mit der Innenfläche des Ringes federnd in Eingriff steht.

2. Anschlussvorrichtung nach Anspruch 1, **dadurch gekennzeichnet, dass** das Schirmelement (20, 21) aus zwei etwa halbkreisförmigen Ringabschnitten besteht, deren jeweils ein Ende mit dem Anschlußelement (19) fest verbunden ist, und dessen jeweils entgegengesetztes Ende (22, 23) unbefestigt bzw. frei federnd dem feststehenden Ende des anderen Elementes zugeordnet ist und sich an diesem bei Auslenkung abstützen kann.

3. Anschlussvorrichtung nach Anspruch 1, **dadurch gekennzeichnet, dass** das Schirmelement (27) aus einem Vollkreisschirm besteht, dessen Anfang fest mit dem Anschlußelement (15) verbunden ist, und dessen freies Ende kreisförmig um mehr als 360° um den Anfangsabschnitt geschlungen ist, wobei das Ende bei Beanspruchung der Spirale entlang des Umfangs des Schirmelementes frei beweglich geführt ist.

4. Anschlussvorrichtung nach einem der Ansprüche 1 - 3, **dadurch gekennzeichnet, dass** ein Kopfteil (15) des Anschlußelementes zwei Öffnungen (16, 17) aufweist und zur Aufnahme einer Schelle (24) mit zugeordneten Öffnungen (16' 17') ausgebildet ist, die mittels Schraubverbindungen (25, 26) fest mit dem Kopfteil (15) so verbunden sind, dass der Adernabschnitt (2) bzw. der Adernabschnitt (3) nach Hindurchführen durch den Abschnitt (21) bzw. (22) der Schirmspirale an dem Anschlußelement befestigbar ist.

5. Anschlussvorrichtung nach Anspruch 1 oder 2, **dadurch gekennzeichnet, dass** das jeweils innere Ende der Spiralenhälfte (20, 21) fest mit den beiden gegenüberliegenden Seiten des Anschlußelementes (19) verbunden sind, und dass das Anschlußelement eine Trennwand für die beiden unterschiedlichen Aderntypen des Kabels (1) darstellt.

6. Anschlussvorrichtung nach Anspruch 1, **dadurch gekennzeichnet, dass** das Anschlußelement (31) aus einem Kopfteil (32) und einem Stegteil (33) besteht, und dass der Stegteil bei (34) im Winkel von 45° in die gleiche Ebene abgebogen wird, derart, dass der Abschnitt (36) ringförmig zu der Schirmspirale (37) gebogen ist.

7. Anschlussvorrichtung nach Anspruch 1 oder einem der Ansprüche 2 - 6, **dadurch gekennzeichnet, dass** die Schirmspirale (38) zum Klemmen des Leitungsschirmes eine Schnellklemmfeder (41), z. B. in Form einer Blattfeder (41) aufweist, die am ausgangsseitigen Anschlussende mit einem Steg (40) befestigt ist oder aus einem einteiligen Zuschnitt gebogen ist.

8. Anschlussvorrichtung nach Anspruch 7, **dadurch gekennzeichnet, daß** die Blattfeder (41) zwei gegeneinander vorgespannte Federschenkel (44, 45) aufweist, deren freie Enden Kontakte (46, 47) zum Kontaktieren der Leitungen aufnehmen.

9. Anschlussvorrichtung nach Anspruch 7, **dadurch gekennzeichnet, dass** die Blattfeder (49) eine Schellenanordnung (50, 51) aufweist, die durch eine Schraubanordnung (52) oder Rastkonturen im Blechteil verriegelbar ist.

10. Anschlussvorrichtung nach einem der Ansprüche 1 - 9, **dadurch gekennzeichnet, dass** die Schirmspirale (38) am anschlussseitigen Umfangsrand kronenartig gezahnt ist, und die Schirmspirale in Umfangsrichtung an einer Stelle geöffnet ist.
